# EUROPÄISCHE PATENTANMELDUNG

(11) **EP 1 591 348 A2**
(43) Veröffentlichungstag der Anmeldung: **02.11.2005**
(21) Anmeldenummer: 04015587.1
(22) Anmeldetag: 02.07.2004
(51) Int. Cl.: B62D 21/02, B62D 33/077

(54) **Anordnung zur Verbindung von RahmenlängsträgernHilfsrahmen für Kraftfahrzeuge**

(30) Priorität: 29.04.2004 EP 04405267
(71) Anmelder: Alcan Technology & Management Ltd., 8212 Neuhausen am Rheinfall (CH)
(72) Erfinder: Bergmann, Günter, 78224 Singen (DE); Hoess, Ralf, 78359 Orsingen (DE)

(57) **Zusammenfassung**

Die Erfindung betrifft einen Hilfsrahmen (1) für Kraftfahrzeuge, insbesondere für Vorderachsen von Personenkraftwagen, enthaltend zwei in Abstand zueinander angeordnete, in Fahrzeuglängsrichtung ausgerichtete Seitenträger (2a, 2b) sowie wenigstens einen die beiden Seitenträger miteinander verbindenden Querträger (4), wobei der Querträger jeweils über ein Knotenelement (5, 6) mit den Seitenträger verbunden ist. Die Erfindung zeichnet sich dadurch aus, dass das Knotenelement (5, 6) ein Gussteil mit wenigstens einer integrierten, der unteren Trägerfläche des Seitenträgers (2a, 2b) anliegenden Seitenträger-Auflagefläche und wenigstens einer integrierten, der unteren Trägerfläche des Querträgers (4) anliegenden Querträger-Auflagefläche sowie mit wenigstens einer integrierten Anschlussstelle für die Anbindung oder Abstützung von Fahrzeugkomponenten, wobei die Anschlusstelle eine von der Seitenträger-Auflagefläche vorstehende und von unten in einer Ausnehmung durch den Seitenträger (2a, 2b) oder eine von der Querträger-Auflagefläche vorstehende und von unten in einer Ausnehmung durch den Querträger (4) geführte hülsenartige Anformung (9, 10, 12, 13) am Knotenelement (5, 6) ist. Dies erlaubt eine durchgängige Ausführung des Seitenträgers im, durch einen knoten verstärkten Verbindungsbereich mit dem Querträger.

## Beschreibung

Vorliegende Erfindung betrifft einen Hilfsrahmen für Kraftfahrzeuge, insbesondere für Vorderachsen von Personenkraftwagen, enthaltend zwei in Abstand zueinander angeordnete, in Fahrzeuglängsrichtung verlaufende Seitenträger sowie wenigstens einen die beiden Seitenträger miteinander verbindenden Querträger, wobei der Querträger jeweils über ein zusätzlich versteifendes Knotenelement mit den Seitenträgern verbunden ist.

Hilfsrahmen für Kraftfahrzeuge finden insbesondere für Personenkraftwagen, aber auch für mit Personenkraftwagen im Aufbau ähnlichen Fahrzeugen bis hin zu Geländewagen und leichten Lieferfahrzeugen Verwendung und sind als mit der Karosserie des Fahrzeuges über elastische Lager verbundene Fahrschemel oder auch zur Vorderwagenaussteifung eingesetzt, bei denen der Hilfsrahmen mit dem Rahmen oder dem Aufbau des Fahrzeuges, insbesondere den Längsträgern des Fahrzeuges, wie Vorbauträgern oder dergleichen, starr verbunden ist. Sowohl in der Ausgestaltung als Fahrschemel wie auch in der Ausgestaltung als versteifende Struktur sind die Hilfsrahmen mitunter Montagerahmen, an denen Radführungsglieder, gegebenenfalls einschliessslich Radfederung, angelenkt bzw. abgestützt sind. Fallweise dienen die Hilfsrahmen auch als Träger für das Lenkgetriebe, oder des Stabilisators. Ferner können die Hilfsrahmen auch Motorträger sein. Aufgrund der vielfältigen Funktionen, welche solche Hilfsrahmen mitunter innehaben, müssen die Hilfsrahmen in Berücksichtigung der auf diese im Normalbetrieb einwirkenden Kräfte stabil ausgeführt werden.

Die Hilfsrahmen sind üblicherweise aufgebaut aus zwei, in Fahrzeuglängsrichtung ausgerichteten Seitenträgern, die über vordere und hintere, elastische oder starre Anbindungspunkte mit dem Aufbau- oder Rahmenlängsträgern, d.h. der Karosseriestruktur verbunden sind, und die ferner über ein, zwei oder mehrere Querträger miteinander verbunden sind, wobei der Hilfsrahmen üblicherweise eine in sich geschlossene Einheit bildet. Die Querträger sind hierbei häufig über sogenannte Knotenelemente mit den Seitenträgern verbunden.

In der Praxis werden solche Hilfsrahmen sowohl in Verbindung mit Vorderachsen wie auch mit Hinterachsen von Personenkraftwagen eingesetzt, wobei sich insbesondere in Verbindung mit Vorderachsen besondere Anforderungen an den Hilfsrahmen und an die Vorbaugestaltung des Fahrzeuges bezüglich des Deformationsverhaltens der Rahmenstruktur in einem Aufprallereignis ergeben.

Bei einem Frontalaufprall bilden die in Fahrzeuglängsrichtung ausgerichteten Längsträger der Vorderbaustruktur sogenannte Lastpfade aus, über welche die im Stossfängerbereich bzw. im vorderen Crashbereich eingeleitete Aufprallenergie in die hintere, der Fahrgastzelle nahe liegende Fahrzeugstruktur eingeleitet wird.

Zur Vermeidung oder Verminderung einer solchen Krafteinleitung in die Fahrgastzelle selbst, wird im Rahmen der Vorbaugestaltung häufig eine gezielte Deformierbarkeit der dem Rahmen oder dem Aufbau zugehörigen Längsträger vorgesehen, wobei die entsprechenden Deformationszonen wenigstens Teilbereiche der rahmen- oder aufbauseitigen Längsträger sind. In diesen Deformationszonen wird Aufprallenergie durch kontrollierte Stauchung, insbesondere Faltung, des Trägerbereichs absorbiert.

Die Ausbildung solcher Deformationszonen trägt im Falle eines Aufprallereignisses, insbesondere eines Frontalaufpralls, zur Erhöhung der Sicherheit der Fahrgäste bei, indem die Längsträger mittels Stauchung der Trägerstruktur unter Schonung der Fahrgastzelle Aufprallenergie absorbieren.

Die in Fahrzeuglängsrichtung ausgerichteten Seitenträger des Hilfsrahmens bilden ebenfalls Lastpfade aus, durch welche Aufprallenergie in hintere Bereiche der Fahrzeugstruktur weitergeleitet wird. Zur Steigerung der Energieabsorption im Vorderbaubereich und somit zur Steigerung der Sicherheit der Fahrgäste, werden häufig auch die Seitenträger mit Deformationszonen ausgebildet, wobei wenigstens in Teilabschnitten der Seitenträger durch kontrollierte Stauchung, insbesondere Faltung, des Seitenträgers Aufprallenergie absorbiert wird.

Die Ausbildung einer weiteren Deformationsebene im Bereich des Hilfsrahmens weist den Vorteil auf, dass die einerseits über die Längsträger und andererseits über die darunterliegenden Seitenträger eingeleitete Energie auf verschiedenen Ebenen abgebaut wird und somit zu einer Erhöhung der Sicherheit beiträgt. Gleichzeitig wird die Absorption von Aufprallenegie durch den Fahrzeugvorderbau erheblich gesteigert.

Die Anbindung der Querträger an die Seitenträger führt jedoch erfahrungsgemäss zu einem nachteiligen Deformationsverhalten der Trägerabschnitte im Anbindungsbereich oder der dem Anbindungbereich nachangeordneten Deformationsbereiche.

Die Seitenträger sind nämlich im Bereich der Querträgeranbindung, insbesondere im Bereich der hinteren Querträger, bei welchen in der Regel Gussknoten eingesetzt werden, häufig teilweise oder vollständig unterbrochen, was die bereits erwähnten nachteiligen Auswirkungen auf das Deformationsverhalten der Seitenträger mitverursacht.

Aufgabe vorliegender Erfindung ist es daher, einen Hilfsrahmen der oben genannten Art, und insbesondere eine Lösung zur Anbindung des Querträgers an die Seitenträger, vorzuschlagen, wobei der Hilfsrahmen sowohl hinsichtlich des Deformationsverhaltens unter Sicherheitsgesichtspunkten wie auch hinsichtlich der notwendigen Betriebsfestigkeit und Steifigkeit befriedigen soll, und durch welchen zudem günstige Montagevoraussetzungen geschaffen werden.

Erfindungsgemäss wird die Aufgabe dadurch gelöst, dass das Knotenelement wenigstens eine integrierte, wenigstens einer der Trägerflächen des Seitenträgers anliegende Seitenträger-Auflagefläche und wenigstens eine integrierte, wenigstens einer der Trägerflächen des Querträgers anliegende Querträger-Auflagefläche sowie wenigstens eine integrierte Anschlussstelle für die Anbindung oder Abstützung einer Fahrzeugkomponente enthält, wobei die Anschlussstelle eine von der Seitenträger-Auflagefläche vorstehende und in einer Ausnehmung durch den Seitenträger oder eine von der Querträger-Auflagefläche vorstehende und in einer Ausnehmung durch den Querträger geführte Anformung am Knotenelement ist.

Das Knotenelement ist bevorzugt aus einem Metall, wie Aluminium, Magnesium, Stahl oder einer Legierung davon. Das Knotenelement ist bevorzugt aus einem Leichtmetall, insbesondere aus Aluminium oder einer Aluminiumlegierung.

Das Knotenelement kann ein Gussteil oder ein Extrusionsteil sein. Das Knotenelement ist bevorzugt einstückig ausgebildet.

Das Knotenelement in Ausführung eines Extrusionsteils ist ein aus einem Extrusionsprofil abgelängter Profilabschnitt, welcher fallweise mittels Schneiden, Sägen, Stanzen oder Fräsen in seine Endform gebracht wird. Die Extrusionsrichtung des montierten Knotenelements liegt vorzugsweise parallel bzw. im wesentlichen parallel zur Fahrzeug-Hochachse (senkrecht zur Fahrbahn). Die Anbindungspunkte bzw. Anschlussstellen sind bevorzugt mitextrudiert.

Das Knotenelement ist besonders bevorzugt ein Gussteil, welches bsp. mittels Druckguss, Kokillenguss oder Sandguss hergestellt ist. Das Knotenelement ist bevorzugt einstückig gegossen.

Das Knotenelement liegt mit seiner Seitenträger-Auflagefläche der oberen oder, in bevorzugter Ausführung, der unteren Trägerfläche des Seitenträgers an. Das Knotenelement kann mit seiner Seitenträger-Auflagefläche jedoch auch der äusseren oder inneren Trägerfläche des Seitenträgers anliegen. Ferner kann das Knotenelement zwei oder mehrere Seitenträger-Auflageflächen enthalten und bsp. zwei oder mehreren Trägerflächen des Seitenträgers anliegen. Dies kann bsp. die untere und obere, die untere und innere bzw. äussere oder die obere und innere bzw. äussere Trägerfläche des Seitenträgers sein.

Das Knotenelement liegt mit seiner Querträger-Auflagefläche der oberen oder, in bevorzugter Ausführung, der unteren Trägerfläche des Querträgers an. Das Knotenelement kann mit seiner Seitenträger-Auflagefläche jedoch auch der vorderen oder hinteren Trägerfläche des Querträgers anliegen. Ferner kann das Knotenelement zwei oder mehrere Querträger-Auflageflächen enthalten und bsp. zwei oder mehreren Trägerflächen des Querträgers anliegen. Dies kann bsp. die untere und obere, die untere und vordere bzw. hintere, die obere und vordere bzw. hintere oder die vordere und hintere Trägerfläche des Querträgers sein.

Die Trägerfläche entspricht vorzugsweise einer aussen liegenden Profilfläche bzw. Profilwand. Untere Trägerfläche bedeutet eine dem Boden zugewandte und obere Trägerfläche eine dem Motorraum zugewandte Trägerfläche. Innere Trägerfläche bedeutet dem Fahrzeuginneren zugewandte und äussere Trägerfläche der Fahrzeugaussenseite zugewandte Trägerfläche. Vordere Trägerfläche bedeutet dem Stossfänger (Front oder Heck) zugewandte und hintere der Fahrgastzelle zugewandte Trägerfläche.

Die Anformung ist bevorzugt von länglicher Gestalt. Die Länge der Anformung ausgehend von ihrem Fussteil bis zum freien Ende entspricht vorzugsweise wenigstens der gesamten Höhe des Profilquerschnitts, den sie durchdringt. Die Anformung ist ferner bevorzugt hülsenartig ausgebildet, d.h. sie enthält wenigstens eine offene oder geschlossene Hohlkammer. Die Anformung kann auch in Art eines massiven Dornes, Stiftes, Bolzens bzw. Zapfens ausgebildet sein.

Das Knotenelement ist bevorzugt ein Formteil mit einem Bodenteil und einer oder mehreren von diesem abstehenden Anformungen. Das Bodenteil ist vorzugsweise von flächiger Gestalt. Die Seitenträger- und Querträger-Auflagefläche wird bevorzugt durch das Bodenteil ausgebildet. Die Anformungen enthalten einen zum Bodenteil gerichteten Fussabschnitt sowie einen freien Endabschnitt. Das Knotenelement kann ferner die Auflageflächen bzw. das Bodenteil versteifende Verstärkungsrippen bzw. Versteifungsstege enthalten.

In bevorzugter Ausführung der Erfindung ist die wenigstens eine Anschlussstelle eine Karosserie-Anschlussstelle zur Anbindung des Hilfsrahmens an eine übergeordnete Karosseriestruktur, insbesondere eine Fahrzeuglängsträger-Anschlussstelle zur Anbindung des Hilfsrahmens an den oder die Fahrzeuglängsträger. Die Anschlussstelle kann ferner auch eine Motormodul-Anschlussstelle zur Abstützung / Lagerung / Anbindung eines Motormoduls auf den Seitenträger oder Querträger sein.

Die Anformungen durchquert den Seitenträger ausgehend von der Auflagefläche bevorzugt vollständig und tritt mit ihrem Endabschnitt andernends aus jener der Auflagefläche gegenüberliegenden Trägerfläche des Seitenträgers hervor, wobei die Stirnfläche des besagten Endabschnitts mit der Trägerfläche bündig liegt oder um ein bestimmtes Mass über die Trägerfläche hinaus vorsteht. Liegt die Seitenträger-Auflagefläche der unteren Trägerfläche des Seitenträgers an, so tritt die Anformung aus deren oberen Trägerfläche aus.

Ist der Endabschnitt der Anformung zur oberen Trägerfläche geführt, so erfolgt die Anbindung der Fahrzeugkomponenten über die genannten Endabschnitte. Ist der Endabschnitt der Anformung zur unteren Trägerfläche geführt, so erfolgt die Anbindung der Fahrzeugkomponenten über das Bodenteil bzw. den im Bodenteil mündenden Fussabschnitt der Anformung.

Die Anformung ist vorzugsweise mit ihrem freien, aus dem Seitenträger austretenden Ende entlang des Kontaktrandes zur oberen Trägerfläche mit dieser verschweisst.

Die Anformung ist querschnittlich bevorzugt von rundlicher, insbesondere von kreisförmiger Gestalt. Die Anformung kann ferner zu ihrem Endabschnitt hin konisch verjüngt ausgebildet sein.

Die hülsenartige Anformung weist ferner zweckmässig eine durch eine Aussenwand begrenzte Hohlkammer auf. Die hülsenartige Anformung ist insbesondere in Form eines Hohlzylinders ausgebildet.

Gemäss einer ersten Ausführungsform weist die hülsenartige Anformung unter Ausbildung zweier gegenüberliegender Öffnungen eine durchgehend offene Kammer auf. Die hülsenartige Anformung enthält bevorzugt Mittel zum Fixieren von Komponenten mittels Schraubverbindungen.

Findet die Anbindung über den Endabschnitt der Anformung statt, so kann die hülsenförmige Anformung im Bereich ihres oberen, freien Endabschnittes eine ringförmige, vollumfängliche Verengung der Kammer enthalten. Findet die Anbindung über den Fussabschnitt der Anformung statt, so kann die hülsenförmige Anformung im Bereich ihres Fussabschnittes eine ringförmige, vollumfängliche Verengung der Kammer enthalten. Die Verengung dient bsp. zur Aufnahme einer Schraubmutter zwecks Fixierung eines Schraubbolzens. Die genannte ringförmige Verengung ist insbesondere in Anschlussstellen zur Anbindung einer Karosseriestruktur mittels Schraubbolzen vorgesehen. Sie kann jedoch auch in Anschlussstellen zur Anbindung eines Motormoduls mittels Schraubbolzen vorgesehen sein.

Findet die Anbindung über den Endabschnitt der Anformung statt, so weist die Anformung gemäss einer weiteren Ausführungsform, insbesondere die hülsenartige Anformung in ihrem oberen, freien Endabschnitt eine pfannenartige, konkave Vertiefung auf, welche durch eine die Kammer unterbrechende Kammerwand geformt wird. Findet die Anbindung über den Fussabschnitt der Anformung statt, so ist die besagte pfannenartige Vertiefung im Fussabschnitt angeordnet.

Die Ausbildung einer solchen pfannenartigen Vertiefung wird vorzugsweise in Anschlussstellen vorgesehen, in welchen eine Komponente, insbesondere ein Motormodul, auf den Hilfsrahmen abgestützt bzw. gelagert wird, wobei die genannte Vertiefung als Zentrierhilfe dient. Die hülsenartige Anformung kann zusätzlich mittel zum Fixieren der Komponente bzw. des Motormoduls mittels Schraubverbindungen, insbesondere mittels Schraubbolzen und Schraubmuttern, enthalten. Diese Mittel können einen Durchbruch durch die pfannenartige, konische Vertiefung bzw. durch die Kammerwand umfassen.

Die Anbindung der Fahrzeugkomponenten an die besagte Anschlussstelle kann, wie erwähnt, mittels Schraubverbindungen geschehen, welche in die hülsenartige Anformung greifen. Ferner kann die Anbindung über in die hülsenartige Anformung greifenden Verbindungsbolzen, wie mittels Schraubmuttern fixierte Schraubbolzen, geschehen.

In besonders bevorzugter Ausführung der Erfindung ist der Seitenträger im Bereich der Querträger-Anbindung durchgängig ausgebildet. Der Seitenträger ist im genannten Bereich vorzugsweise nur durch die, die Anformungen des Knotenelements aufnehmenden Ausnehmungen durchbrochen. Ferner können am Seitenträger weitere Aussparungen, z.B. zur Anbindung des Querträgers, vorgesehen sein, welche jedoch den Seitenträger nicht vollständig bzw. nur in einem kleinen Querschnittsabschnitt unterbrechen.

Der Seitenträger und/oder der Querträger ist bevorzugt ein Ein- oder Mehrkammerhohlprofil. Der Seitenträger und/oder der Querträger besteht bevorzugt aus einem Metall wie Stahl und vorzugsweise aus einem Leichtmetall, wie Aluminium oder einer Aluminiumlegierung.

Der Seitenträger und/oder der Querträger ist bevorzugt ein Extrusionsprofil. Die Extrusionsprofile können ferner vollständig oder abschnittsweise mittels weiteren Umformverfahren, wie Innenhochdruckumformverfahren, in vom ursprünglichen Extrusionsprofil abweichende Querschnitte umgeformt sein.

Die genannten Träger können jedoch auch aus einem Walzprodukt geformt und geschweisst sein.

In Weiterbildung der Erfindung enthält das Knotenelement in seinen Seitenträger-Auflageflächen eine erste integrierte Fahrzeuglängsträger-Anschlussstelle und eine zweite integrierte Motormodul-Anschlussstelle, wobei die Anschlusstellen von einer Seitenträger-Auflagefläche vorstehende und durch Ausnehmungen im Seitenträger geführte Anformungen am Knotenelement sind. Die Anformungen liegen in einer der oben beschriebenen Ausgestaltung vor. Sie sind vorzugsweise hülsenförmig ausgebildet. Die Seitenträger-Auflagefläche ist bevorzugt die untere Trägerfläche des Seitenträgers, so dass die Anformungen von unten durch den Seitenträger zur oberen Trägerfläche geführt sind.

In Weiterbildung der Erfindung enthält das Knotenelement in seiner Querträger-Auflagefläche eine integrierte Anschlussstelle zur Anbindung oder Abstützung einer Fahrzeugkomponente, wobei die Anschlussstelle eine von einer Querträger-Auflagefläche vorstehende und in einer Ausnehmung durch den Querträger geführte Anformung am Knotenelement ist. Die Anformungen liegen in einer der oben beschriebenen Ausgestaltung vor. Sie sind vorzugsweise hülsenförmig ausgebildet. Die Seitenträger-Auflagefläche ist bevorzugt die untere Trägerfläche des Seitenträgers, so dass die Anformungen von unten durch den Seitenträger zur oberen Trägerfläche geführt sind. Die vorgenannte Anschlussstelle ist vorzugsweise eine Motormodul-Anschlussstelle für die Abstützung eines Motormodul auf den Querträger oder eine Fahrzeuglängsträger-Anschlussstelle zur Anbindung des Hilfsrahmens an den Fahrzeuglängsträger.

Die oben beschriebenen Motormodul-Anschlussstelle(n) können insbesondere sowohl als Lagerpunkte wie auch als Anbindungsstellen ausgebildet sein.

Die genannte Anformung durchquert den Querträger vorzugsweise vollständig und tritt mit ihrem Endabschnitt andernends aus der Trägerfläche des Querträgers hervor, wobei die Stirnfläche des besagten Endabschnitts mit der besagten Trägerfläche bündig liegt oder um ein bestimmtes Mass über die Trägerfläche hinaus vorsteht.

Die Anformung ist vorzugsweise mit ihrem freien, aus dem Querträger austretenden Ende entlang des Kontaktrandes zur Trägerfläche mit dieser verschweisst. Die Anformung kann gemäss einer der oben beschriebenen Ausführungsform ausgebildet sein.

Das Knotenelement kann ferner zusätzlich zu den oben genannten Anschlussstellen für Motormodul und Karosserie noch eine oder mehrere weitere integrierte Anschlussstellen zur Anbindung von Lenkerelementen, wie Fahrwerkslenker, und/oder Streben, wie Zugstreben, oder Lagerungspunkte enthalten. Die Anschlussstellen können in der Form von Anformungen, insbesondere hülsenförmigen Anformungen, wie oben beschrieben oder in anderer Form, z.B. als Bohrungen bzw. durchgehende Ausnehmungen ausgestaltet sein.

In Weiterentwicklung der Erfindung ist das Knotenelement gabelförmig mit einem ersten und zweiten jeweils eine Seitenträger-Auflagefläche ausbildenden Gabelschenkel ausgebildet. In einem ersten Gabelschenkel ist bevorzugt eine Karosserie- bzw. Fahrzeuglängsträger-Anschlussstelle und in einem zweiten Gabelschenkel bevorzugt eine Motormodul-Anschlussstelle, jeweils in Form einer oben beschriebenen Anformung, ausgebildet. Die Gabelschenkel sind durch eine sogenannte Gabelbrücke miteinander verbunden, wobei die Gabelbrücke eine Querträgerauflagefläche ausbildet. Die Gabelbrücke enthält ferner bevorzugt eine Anschlussstelle für Motormodul in Form einer oben beschriebenen Anformung.

In einer ersten Ausführung liegen die Gabelschenkel der unteren Trägerfläche des Seitenträgers an. Der Endabschnitt des Querträgers kann unter Anlage an der unteren Seite des Seitenträgers zwischen dem ersten und zweiten Gabelschenkel hindurchgeführt sein. Der Seitenträger kann zur Aufnahme des Querträger-Endabschnittes eine Ausnehmung in der unteren Trägerfläche aufweisen. Die Ausnehmung kann bsp. durch Entfernen eines Bereichs der unteren Profilwand im Bereich der Querträger Anlagefläche ausgebildet sein. Der Querträger stützt sich gemäss dieser Ausführung bsp. auf die Stirnfläche einer äusseren und inneren Profilwand des Seitenträgers ab.

In Weiterbildung der ersten Ausführung kann der zwischen dem ersten und zweiten Gabelschenkel angeordnete Endabschnitt des Querträgers einen U-förmigen offenen Querschnitt aufweisen. Der U-förmige, offene Querschnitt des Endabschnittes des als Hohlprofil ausgebildeten Querträgers kann durch Quetschen des Profilquerschnitts oder Abtrennen einer Profilwand ausgebildet sein.

Die Gabelschenkel können ferner innere, einander zugewandte und den Gabelzwischenraum begrenzende und quer zur Trägerfläche des Seitenträgers, d.h. in Fahrzeug-Hochachse, verlaufende Wandabschnitte aufweisen, welche als Anschlussstellen für Lenkerelemente, wie Fahrwerkslenker, ausgebildet sind. Die Anschlussstellen sind bsp. in Form von Ausnehmungen im Wandabschnitt ausgebildet, durch welche sich Befestigungsmittel, wie Schrauben, Bolzen, Stifte etc. führen lassen. Die Befestigungsmittel sind hierzu durch die Lenkerelemente sowie durch je eine Ausnehmung der beiden gegenüberliegenden Wandabschnitte und gegebenenfalls durch Profilwände des Querträger-Endabschnittes geführt.

In einer zweiten Ausführung liegen die Gabelschenkel der oberen Trägerfläche des Seitenträgers an. Der Endabschnitt des Querträgers kann unter Anlage an der oberen Trägerfläche des Seitenträgers zwischen dem ersten und zweiten Gabelschenkel hindurchgeführt sein. Der Seitenträger kann zur Aufnahme des Querträger-Endabschnittes eine Ausnehmung aufweisen. Die Ausnehmung kann bsp. durch Entfernen eines Bereichs der oberen Profilwand im Bereich der Querträger Anlagefläche ausgebildet sein. Der Querträger stützt sich gemäss dieser Ausführung bsp. auf die Stirnfläche einer äusseren und inneren Profilwand des Seitenträgers ab.

Das Knotenelement kann entlang seiner Kontaktränder mit dem Seitenträger abschnittsweise oder durchgehend mit dem Seitenträger verschweisst sein. Das Knotenelement kann ferner entlang seiner Kontaktränder mit dem Querträger abschnittsweise oder durchgehend mit dem Querträger verschweisst sein. Ferner kann der Querträger entlang seiner Kontaktränder mit dem Seitenträger abschnittsweise oder durchgehend mit dem Seitenträger verschweisst sein.

Das Knotenelement enthält bevorzugt wenigstens eine integrierte, der unteren Trägerfläche des Seitenträgers anliegende Seitenträger-Auflagefläche und wenigstens eine integrierte, der unteren Trägerfläche des Querträgers anliegende Querträger-Auflagefläche sowie wenigstens eine integrierte Anschlussstelle für die Anbindung und/oder Abstützung einer Fahrzeugkomponente, wobei die Anschlusstelle eine von der Seitenträger-Auflagefläche vorstehende und von unten in einer Ausnehmung durch den Seitenträger oder eine von der Querträger-Auflagefläche vorstehende und von unten in einer Ausnehmung durch den Querträger geführte Anformung am Knotenelement ist.

Die Seitenträger des erfindungsgemässen Hilfsrahmens bilden in Vorwärtsfahrtrichtung bevorzugt vordere freie Enden aus, über welche bei einem Frontalaufprall die Aufprallenergie in die Seitenträger eingeleitet wird. Die Seitenträger sind ferner mit ihren hinteren Endbereichen bevorzugt an die Bodengruppe oder Schweller angebunden. Die nicht durch die Seitenträger des Hilfsrahmens absorbierte Aufprallenergie wird hier in die Bodengruppe bzw. in den Schwellerbereich der dahinterliegenden Fahrzeugstruktur eingeleitet.

Eine besonders bevorzugte Ausführung der Erfindung umfasst einen Hilfsrahmen für Vorderachsen, enthaltend zwei in Abstand zueinander angeordnete, in Fahrzeuglängsrichtung ausgerichtete Seitenträger sowie einen in Vorwärtsfahrtrichtung vorderen und hinteren Querträger. Die beiden Querträger sind zueinander beabstandet und verbinden die beiden Seitenträger miteinander. Die Verbindung wenigstens eines Querträgers, vorzugsweise des hinteren Querträgers, mit den beiden Seitenträgern erfolgt über die vorgenannten, erfindungsgemässen Knotenelemente. Da im Bereich des hinteren Querträgers eine höhere Anzahl von Anbindungspunkten notwendig sind als im Bereich des vorderen Querträgers, ist in jenem Bereich die Verwendung von Knotenelementen mit einer verhältnismässig hohen Anzahl an integrierten Anschlussstellen besonders bevorzugt.

Der zweite Querträger, vorzugsweise der vordere Querträger, kann ebenfalls mittels der vorgenannten, erfindungsgemässen Knotenelementen mit den beiden Seitenträgern verbunden sein. Der zweite Querträger kann aber auch mittels anderen Verbindungselementen mit den Seitenträgern versteifend verbunden sein. Die Seitenträger sind jedoch bevorzugt sowohl im Anbindungsbereich des vorderen wie auch des hinteren Querträgers durchgängig, d.h. unterbruchslos ausgebildet.

Das Knotenelement des erfindungsgemässen Hilfsrahmens zeichnet sich durch eine hohe Funktionsintegration aus. Dadurch wird die Anzahl der Montageteile zur Herstellung des Hilfsrahmens mit Verbindungselementen und Anbindungsstellen merklich reduziert.

Das Knotenelement dient einerseits als Anbindungspunkt für diverse Fahrzeugkomponenten, wohingegen bis anhin die Anbindungspunkte in der Regel separat in Form von in die Seitenträger und Querträger eingelassene oder an diese befestigten Verbindungselemente angefertigt wurden. Andererseits trägt das Knotenelement wesentlich zur Aussteifung des Hilfsrahmens im Gesamten und des Verbindungungsbereichs zwischen Quer- und Seitenträger im Lokalen bei. Das genannte Knotenelement erlaubt eine durchgängige Ausführung des Seitenträgers im, durch den Knoten verstärkten Verbindungsbereich zum Querträger, was wiederum zur Versteifung des Hilfsrahmens beiträgt.

Die Durchgängigkeit der Seitenträger erlaubt die Ausbildung von Deformationszonen im Bereich der Querträger-Verbindungsstellen und den dahinterliegenden Bereichen. Dadurch verbessert sich das Deformationsverhalten der Seitenträger erheblich, indem in der durch die Seitenträger ausgebildeten Deformationsebene mehr Aufprallenergie kontrolliert absorbiert werden kann.

Die im Knotenelement integrierten Anschlussstellen als längliche Anformungen gewährleisten überdies eine optimale Krafteinleitung von den auf diesen abgestützen Fahrzeugkomponenten, wie Fahrzeuglängsträger oder Motormodul, in den Hilfsrahmen, indem die Anschlussstellen zusätzliche Kraftunterstützung durch das die Anformungen geschlossen umgebende Trägerprofil, wie Seitenträger oder gegebenenfalls Querträger, sowie durch das Knotenelement selbst erfährt.

Selbstverständlich kann der besagte Hilfsrahmen neben den in den Knotenelementen integrierten Anschlussstellen weitere Anschlussstellen in den Seitenträgern und/oder dem oder den Querträgern enthalten. Diese können beispielsweise in Form der bereits bekannten, separat in die Trägerprofile eingelassenen Anschlusshülsen ausgestaltet sein.

Der erfindungsgemässe Hilfsrahmen kann sowohl in Verbindung mit Vorderachsen, z.B. im Vorderbau, wie auch in Verbindung mit Hinterachsen, z.B. im Hinterbau, von Kraftfahrzeugen ganz allgemein und insbesondere von Personenkraftwagen, von mit Personenkraftwagen im Aufbau ähnlichen Fahrzeugen, wie Geländewagen oder Lieferfahrzeugen, eingesetzt werden. Erfindungsgemässe Hilfsrahmen im Vorderbau wie auch im Hinterbau enthalten bevorzugt zwei parallel zueinander angeordnete und über einen, insbesondere über zwei Querträger miteinander verbundene Seitenträger. Die Querträger sind zweckmässig quer zu den Seitenträgern angeordnet, bsp. in einem Winkel von rund 90°.

Im folgenden wird die Erfindung beispielhaft und mit Bezug auf die beiliegenden Zeichnungen näher erläutert. Es zeigen:
- Fig. 1:: eine Unteransicht eines schematisch dargestellten Hilfsrahmens gemäss Erfindung;
- Fig. 2:: eine perspektivische Draufsicht des Verbindungsabschnittes zwischen Seitenträger und Querträger gemäss Erfindung;
- Fig. 3:: eine perspektivische Ansicht eines Knotenelementes;
- Fig. 4:: einen Querschnitt durch die Schnittlinie A - A gemäss Fig. 2.

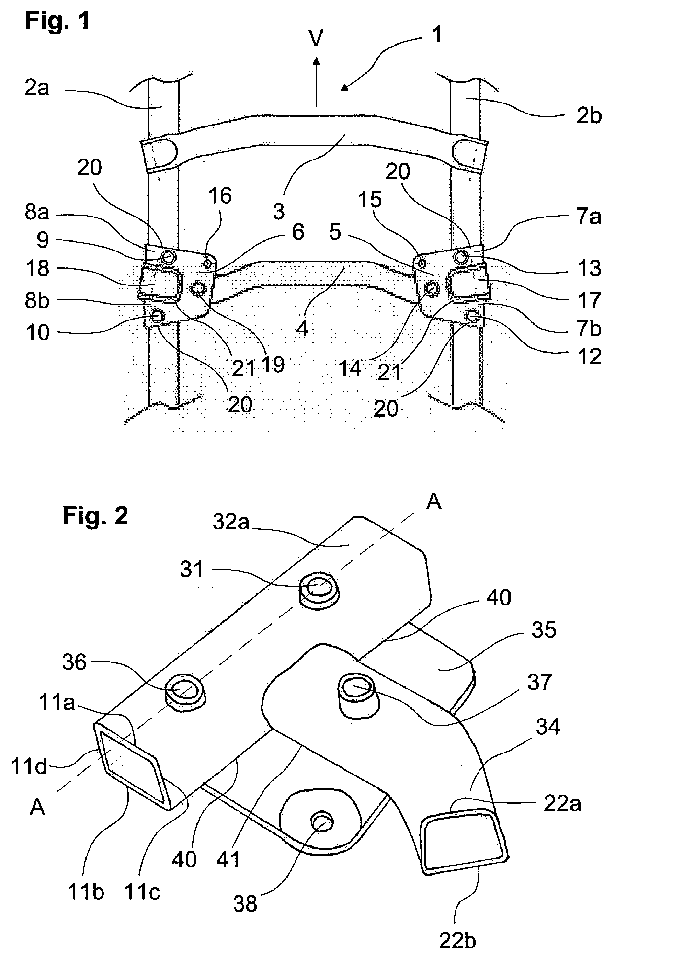

Der Hilfsrahmen 1 gemäss Fig. 1 enthält zwei in Fahrzeuglängsrichtung ausgerichtete, zueinander beabstandete und im wesentlichen parallel verlaufende Seitenträger 2a, 2b, sowie einen in Vorwärtsfahrtrichtung V vorderen Querträger 3 und einen hinteren Querträger 4 und ist Teil eines Fahrzeugvorderbaus. Die Querträger 3, 4 sind mit den Seitenträgern 2a, 2b über Knotenstellen miteinander verbunden. Die Knotenstellen am hinteren Querträger 4 werden durch Knotenelemente 5, 6 ausgebildet, welche über Auflageflächen an unteren Trägerflächen bzw. Profilwände 11 b, 22b der Seitenträger 2a, 2b und des Querträgers 4 anliegen. Die Knotenelemente 5, 6 sind gabelförmig ausgebildet mit jeweils einem ersten Gabelarm bzw. -schenkel 7a, 8a und einem zweiten Gabelarm bzw. -schenkel 7b, 8b.

Der erste Gabelarm 7a, 8a enthält eine Motormodul-Anschlussstelle in der Ausführung einer hülsenartige Anformung 9, 13 für die Anbindung, Abstützung und/oder Lagerung eines Motormoduls (nicht gezeigt), wobei die hülsenartige Anformung von unten in einer Ausnehmung durch den Seitenträger 2a, 2b geführt ist.

Der zweite Gabelarm 7b, 8b enthält eine Karosserie-Anschlussstelle in der Ausführung einer hülsenartige Anformung 10, 12 für die Anbindung des Hilfsrahmens 1 an eine Karosseriestruktur, wie Fahrzeuglängsträger (nicht gezeigt), wobei die hülsenartige Anformung von unten in einer Ausnehmung durch den Seitenträger geführt ist.

Die beiden Knotenelemente 5, 6 enthalten ferner eine weitere Anschlusstelle 15, 16 für Strebenelemente in Form einer durchgängigen Ausnehmung.

Die der unteren Trägerfläche 22b des Querträgers 4 zugewandte Auflagefläche des Knotenelementes 5, 6 enthält eine weitere Motormodul-Anschlussstelle in der Ausführung einer hülsenartige Anformung 14, 19 für die Anbindung, Abstützung und/oder Lagerung eines Motormoduls (nicht gezeigt), wobei die hülsenartige Anformung von unten in einer Ausnehmung durch den Querträger 4 geführt ist.

Der Querträger 4 ist mit seinen Endabschnitten jeweils zwischen den Gabelarmen 7a, 7b; 8a, 8b durchgeführt und liegt im Bereich der unteren Trägerfläche 11 b den Seitenträgern 2a, 2b an. Die Endabschnitte bilden hierbei bodenwärtig offene, U-förmige Rinnenprofilquerschnitte aus, welche als Aufnahmebereiche 17, 18 für Lenkerelemente dienen.

Das Knotenelement 5, 6 ist ferner an seinen Seitenträger-Kontakträndern 20 sowie seinen Querträger-Kontakträndern 21 mit dem Seitenträger bzw. dem Querträger wenigstens abschnittsweise unter Ausbildung einer Schweissraupe verschweisst. Ferner sind die aus den oberen Trägerflächen 11a, 22a der Seitenträger 2a, 2b bzw. des Querträgers 4 austretende hülsenförmigen Anformungen 9, 10, 12, 13, 14, 19 an den Kontakträndern mit dem entsprechenden Trägerprofil unter Ausbildung einer die Anformung vollständig oder teilweise umlaufenden Schweissnaht verschweisst.

Der Seitenträger 32a und der Querträger 34 gemäss Fig. 2 sind über ein Knotenelement 35 miteinander verbunden. Der Seitenträger 32a enthält eine obere 11a, dem Motorraum zugewandte, eine untere 11 b dem Boden zugewandte, eine innere 11 c, dem Fahrzeuginneren zugewandte, sowie eine äussere 11 d, der Fahrzeugaussenseite zugewandte Trägerfläche. Der Querträger 34 enthält eine obere 22a, dem Motoraum zugewandte, und eine untere 22b, dem Boden zugewandte Trägerfläche. Das Knotenelement enthält eine Karosserie-Anschlussstelle in der Ausführung einer hülsenartige Anformung 31 für die Anbindung des Hilfsrahmens an eine Karosseriestruktur, wie Fahrzeuglängsträger (nicht gezeigt), wobei die hülsenartige Anformung 31 von unten in einer Ausnehmung durch Seitenträger 32a geführt ist. Das Knotenelement 35 enthält ferner zwei Motormodul-Anschlussstellen in der Ausführung hülsenartiger Anformungen 36, 37 für die Anbindung, Abstützung und/oder Lagerung eines Motormoduls (nicht gezeigt), wobei eine erste hülsenartige Anformung 36 von unten in einer Ausnehmung durch den Seitenträger 32a und eine zweite hülsenartige Anformung 37 von unten in einer Ausnehmung durch den Quertäger 34 geführt ist.

Das Knotenelement 35 kann abschnittsweise oder durchgehend entlang seiner Seitenträger-Kontaktränder 40 mit dem Seitenträger 32b und entlang seiner Querträger-Kontaktränder 41 mit dem Querträger 34 verschweisst sein. Das Knotenelement 35 enthält ferner eine Anbindungsstelle 38 in Form einer durchgehenden Ausnehmung für ein Fahrzeugaggregat.

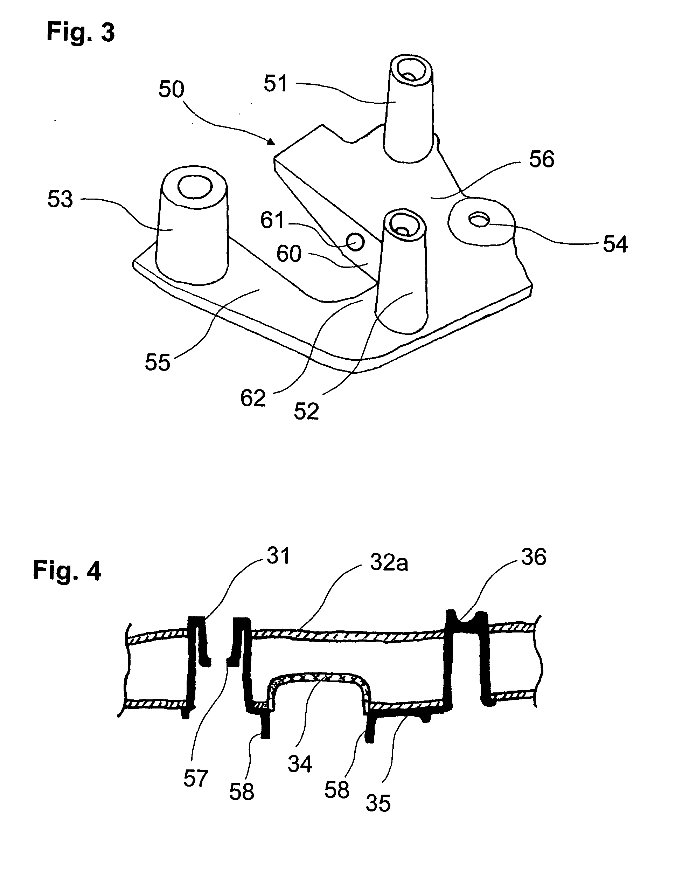

Fig. 3 zeigt ein schematisch dargestelltes Knotenelement 50 mit einem ersten Gabelschenkel 55 und zweiten Gabelschenkel 56 sowie einer Gabelbrücke 62. Der erste Gabelschenkel 55 enthält eine Anbindungsstelle für eine Karosseriestruktur in Form einer hülsenförmigen Anformung 53. Der zweite Gabelschenkel 56 enthält eine Anschlussstelle zur Abstützung bzw. Lagerung eines Motormoduls in Form einer hülsenförmigen Anformung 51. Eine weitere Motormodul-Anschlussstelle in Form einer hülsenartigen Anformung 52 ist im Verbindungsteil, d.h. in der Gabelbrücke 62, zwischen den beiden Gabelschenkeln 55, 56 angeordnet. Im weiteren enthält das Knotenelement 50 eine weitere Anschlussstelle 54 in Form einer durchgängigen Ausnehmung zur Anbindung von z.B. Verbindungsstreben oder weiteren Aggregaten. Die beiden Gabelschenkel 55, 56 enthalten innere, einander zugewandte und den Gabelzwischenraum begrenzende Wandabschnitte 60, welche je eine Ausnehmung 61 als Anschlussschnittstelle für ein Lenkerelement aufweisen.

Die Querschnittsansicht in Fig. 4 durch die Schnittlinie A - A gemäss Fig. 2 zeigt das Knotenelement 35 mit der ersten hülsenförmigen Anformung 31 zur Anbindung des Hilfsrahmens an die Karosseriestruktur und der zweiten hülsenförmigen Anformung 36 zur Abstützung eines Motormoduls auf den Hilfsrahmen. Die beiden hülsenförmigen Anformungen 31, 36 sind auf Gabeischenkeln des Knotenelementes 35 angeordnet. Die beiden hülsenförmigen Anformungen 31, 36 sind in Ausnehmungen im Seitenträger 32a eingelassen. Sie durchqueren diesen vollständig und ragen mit ihren Endabschnitten um ein bestimmtes Mass über seine obere Trägerfläche hinaus. Die hülsenförmige Anformung 36 der Motormodul-Anschlussstelle weist in ihrem oberen Endabschnitt eine pfannenartige Vertiefung auf, welche durch eine Kammerwand in der Anformung ausgebildet wird.

Die hülsenförmige Anformung 31 der Karosserie-Anschlussstelle weist in ihrem oberen Endabschnitt eine ringförmige, vollumfängliche Verengung 57 der Kammer auf. Die Verengung 57 dient bsp. zur Aufnahme einer Schraubenmutter zwecks Fixierung eines Schraubbolzens (nicht gezeigt).

Die beiden Gabelschenkel enthalten innere, einander zugewandte und den Gabelzwischenraum begrenzende Wandabschnitte 58 mit Anschlussstellen (nicht gezeigt) für ein Lenkerelement. Zwischen den beiden Gabelschenkeln ist der in zu einem U-förmigen Querschnitt ausgebildete Endabschnitt des Querprofils 34 durchgeführt. Der besagte Endabschnitt ist in eine in der unteren Trägerfläche des Seitenträgers 32a vorgesehene Ausnehmung eingelassen.

## Patentansprüche

1. Hilfsrahmen (1) für Kraftfahrzeuge, insbesondere für Vorderachsen von Personenkraftwagen, enthaltend zwei in Abstand zueinander angeordnete, in Fahrzeuglängsrichtung ausgerichtete Seitenträger (2a, 2b) sowie wenigstens einen die beiden Seitenträger miteinander verbindenden Querträger (4), wobei der Querträger jeweils über ein versteifendes Knotenelement (5, 6) mit den Seitenträgern verbunden ist,
**dadurch gekennzeichnet, dass**
das Knotenelement (5, 6) wenigstens eine integrierte, wenigstens einer der Trägerflächen des Seitenträgers (2a, 2b) anliegende Seitenträger-Auflagefläche und wenigstens eine integrierte, wenigstens einer der Trägerflächen des Querträgers (4) anliegende Querträger-Auflagefläche sowie wenigstens eine integrierte Anschlussstelle für die Anbindung oder Abstützung einer Fahrzeugkomponente enthält, wobei die Anschlusstelle eine von der Seitenträger-Auflagefläche vorstehende und in einer Ausnehmung durch den Seitenträger (2a, 2b) oder eine von der Querträger-Auflagefläche vorstehende und in einer Ausnehmung durch den Querträger (4) geführte Anformung (9, 10, 12, 13) am Knotenelement (5, 6) ist.

2. Hilfsrahmen nach nach Anspruch 1, wobei der Seitenträger (2a, 2b) im Bereich der Anbindung des Querträgers (4) durchgängig ausgebildet ist.

3. Hilfsrahmen einem der Ansprüche 1 bis 2, wobei das Knotenelement ein Gussteil oder ein Extrusionsteil.

4. Hilfsrahmen nach einem der Ansprüche 1 bis 3, wobei das Knotenelement (5, 6) wenigstens eine integrierte, der unteren Trägerfläche des Seitenträgers (2a, 2b) anliegende Seitenträger-Auflagefläche und wenigstens eine integrierte, der unteren Trägerfläche des Querträgers (4) anliegende Querträger-Auflagefläche sowie wenigstens eine integrierte Anschlussstelle für die Anbindung oder Abstützung einer Fahrzeugkomponente enthält, und die Anschlusstelle eine von der Seitenträger-Auflagefläche vorstehende und von unten in einer Ausnehmung durch den Seitenträger (2a, 2b) oder eine von der Querträger-Auflagefläche vorstehende und von unten in einer Ausnehmung durch den Querträger (4) geführte Anformung (9,10,12,13) am Knotenelement (5, 6) ist.

5. Hilfsrahmen nach einem der Ansprüche 1 bis 4, wobei die Anschlussstelle eine Karosserie-Anschlussstelle, insbesondere eine Fahrzeuglängsträger-Anschlussstelle, zur Anbindung des Hilfsrahmens (1) an die Karosseriestruktur, insbesondere an den Fahrzeuglängsträger, oder eine Motormodul-Anschlussstelle zur Abstützung eines Motormoduls auf den Seitenträger (2a, 2b) oder den Querträger (4) ist.

6. Hilfsrahmen nach einem der Ansprüche 1 bis 5, wobei die Anformung (9, 10, 12, 13, 14, 19) den Seitenträger (2a, 2b) oder den Querträger (4) vollständig durchstösst und andernends mit ihrem Endabschnitt aus der gegenüberliegenden Trägerfläche des Seitenträger (2a, 2b) oder des Querträgers (4) austritt.

7. Hilfsrahmen nach einem der Ansprüche 1 bis 6, wobei die Anformung (9, 10, 12, 13, 14, 19) an ihrem freien, aus dem Seitenträger (2a, 2b) oder Querträger (4) austretenden Ende mit dem Seitenträger (2a, 2b) oder Querträger (4) verschweisst ist.

8. Hilfsrahmen nach einem der Ansprüche 1 bis 7, wobei die Seitenträger (2a, 2b) und/oder die Querträger (4) Ein- oder Mehrkammerhohlprofile sind.

9. Hilfsrahmen nach einem der Ansprüche 1 bis 8, wobei das Knotenelement (5, 6) ein Metallgussteil, vorzugsweise ein Leichtmetallgussteil, insbesondere ein Gussteil aus Aluminium oder einer Aluminiumlegierung ist.

10. Hilfsrahmen nach einem der Ansprüche 1 bis 9, wobei das Knotenelement (5, 6) als flächiges Formteil mit wenigstens einer von diesem abstehenden Anformung (9,10, 12, 13, 14, 19) ausgebildet ist.

11. Hilfsrahmen nach einem der Ansprüche 1 bis 10, wobei das Knotenelement (5, 6) ein einstückig mittels Druckguss, Kokillenguss oder Sandguss hergestelltes Formteil ist.

12. Hilfsrahmen nach einem der Ansprüche 1 bis 11, wobei das Knotenelement (5, 6) eine erste integrierte Fahrzeuglängsträger-Anschlussstelle und eine zweite integrierte Motormodul-Anschlussstelle enthält, und die Anschlusstellen von einer Seitenträger-Auflagefläche vorstehende und von unten in einer Ausnehmung durch den Seitenträger geführte Anformung am Knotenelement (5, 6) sind.

13. Hilfsrahmen nach einem der Ansprüche 1 bis 12, wobei das Knotenelement (5, 6) eine integrierte Anschlussstelle zur Anbindung oder Abstützung einer Fahrzeugkomponente enthält, und die Anschlussstelle eine von einer Querträger-Auflagefläche vorstehende und von unten in einer Ausnehmung durch den Querträger geführte Anformung (14, 19) am Knotenelement (5, 6) ist.

14. Hilfsrahmen nach Anspruch 13, wobei die Anschlussstelle eine Motormodul-Anschlussstelle für die Abstützung eines Motormoduls auf den Querträger (4) oder eine Fahrzeuglängsträger-Anschlussstelle zur Anbindung des Hilfsrahmens an den Fahrzeuglängsträger ist.

15. Hilfsrahmen nach einem der Ansprüche 13 bis 14, wobei die Anformung (14, 19) den Querträger (4) vollständig durchstösst und andernends mit ihrem Endabschnitt aus der oberen Trägerfläche des Querträgers (4) austritt.

16. Hilfsrahmen nach einem der Ansprüche 13 bis 15, wobei die Anformung (14, 19) an ihrem freien, aus dem Querträger austretenden Ende mit dem Querträger (4) verschweisst ist.

17. Hilfsrahmen nach einem der Ansprüche 1 bis 16, wobei das Knotenelement (5, 6) eine oder mehrere integrierte Anschlussstellen (15, 16) zur Anbindung von Aggregaten und/oder Streben enthält.

18. Hilfsrahmen nach einem der Ansprüche 1 bis 17, wobei das Knotenelement (5, 6) gabelförmig mit einem ersten und zweiten jeweils eine Seitenträger-Auflagefläche ausbildenden Gabelschenkel (7a, 7b; 8a, 8b) ist.

19. Hilfsrahmen nach Anspruch 18, wobei in einem ersten Gabelschenkel (7a, 8a) eine Motormodul-Anschlussstelle und/oder in einem zweiten Gabelschenkel (7b, 8b) eine Fahrzeuglängsträger-Anschlussstelle ausgebildet ist.

20. Hilfsrahmen nach einem der Ansprüche 18 bis 19, wobei der Endabschnitt des Querträgers (4) unter Anlage an der unteren Trägerfläche des Seitenträgers (2a, 2b) zwischen dem ersten und zweiten Gabelschenkel (7a, 7b; 8a, 8b) hindurchgeführt ist.

21. Hilfsrahmen nach Anspruch 20, wobei der zwischen dem ersten und zweiten Gabelschenkel (7a, 7b; 8a, 8b) angeordnete Endabschnitt des Querträgers (4) als Anschlussstelle für Lenkerelemente in Form eines U-förmigen Querschnitt ausbildet ist.

22. Hilfsrahmen nach einem der Ansprüche 1 bis 21, wobei im Knotenelement (5) eine Anschlussstelle für einen Fahrwerkslenker ausgeführt ist.

23. Hilfsrahmen nach einem der Ansprüche 1 bis 22, wobei die Anformung hülsen- oder zapfenförmig ausgebildet ist.
